# FASCICULE DE BREVET EUROPEEN

(11) **EP 0 498 127 B1**
(45) Date de publication et mention de la délivrance du brevet: **12.04.1995**
(21) Numéro de dépôt: 91400255.5
(22) Date de dépôt: 04.02.1991
(51) Int. Cl.: A22C 15/00

(54) **Procédé et machine pour enfiler la boucle des saucissons et analogues sur une barre**
Verfahren und Vorrichtung zum Einfädeln von Wurstaufhängeschlaufen auf einen Stock
Method and device for threading sausage suspension loop on a rod

(43) Date de publication de la demande: 12.08.1992
(73) Titulaire: Chateau, Clotaire Raoul Georges, 94420 Le Plessis Trevise (FR)
(72) Inventeur: Chateau, Clotaire Raoul Georges, 94420 Le Plessis Trevise (FR)
(74) Mandataire: Vander-Heym, Serge

(56) Documents cités:
- EP-A- 0 129 864
- DE-C- 37 181
- FR-A- 1 483 818
- FR-A- 2 619 285
- FR-A- 2 650 482

## Description

La présente invention est relative à un procédé pour enfiler des saucissons et analogues sur une barre.

Lorsque la saucisse a été formée et fermée par une pince métallique, il faut pouvoir la suspendre en vue de la cuisson notamment.

A cet effet, chaque saucisse présente, à une extrémité, une boucle réalisée à l'aide d'une ficelle nouée qui est emprisonnée et maintenue par la pince précitée, ladite boucle permettant de suspendre la saucisse sous une barre qui en reçoit un très grand nombre.

Le problème posé consiste à enfiler les boucles sur la barre et jusqu'à présent cette opération était effectuée comme par example decrite dans FR-A-2 619 285.

Le procédé de l'invention consiste à pincer la boucle pour placer ses deux brins dans un même plan puis à pincer dans une direction perpendiculaire les deux dits brins et à les placer de part et d'autre d'un plan passant par l'axe d'une aiguille mobile axialement.

L'invention sera mieux comprise par la description qui va suivre, faite en se référant aux dessins annexés à titre d'exemple indicatif seulement, sur lesquels :

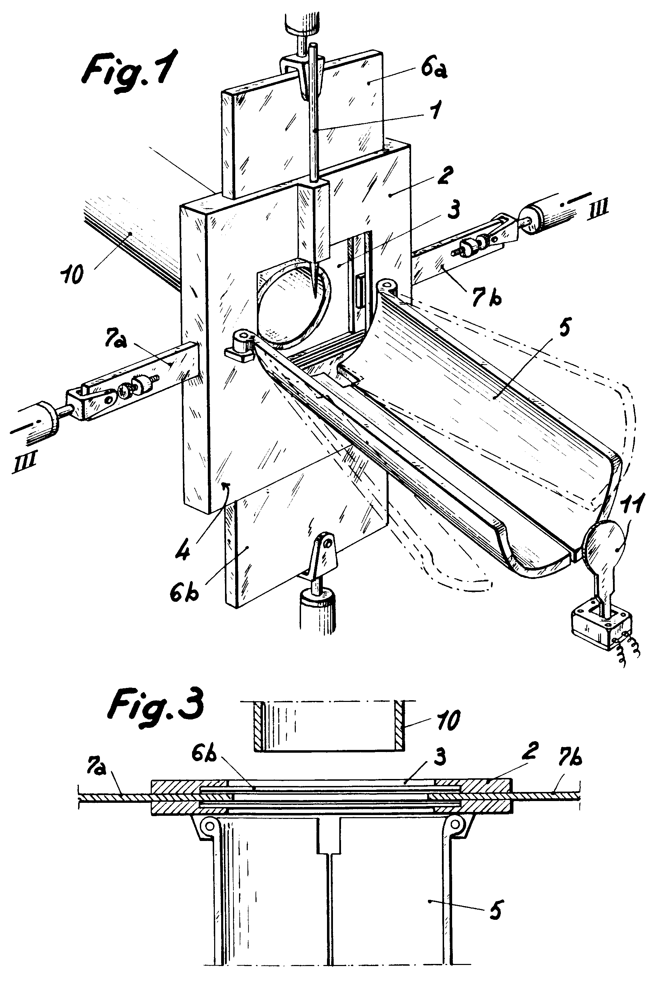

La figure 1 est une vue en perspective d'une machine permettant la mise en oeuvre du procédé de l'invention ;
La figure 2 est une vue analogue à la figure 1 montrant la boucle pincée ;
La figure 3 est une vue en coupe horizontale effectuée selon la ligne III-III de la figure 1;
La figure 4 est une vue partielle, en perspective d'un détail de la figure 2.

En se reportant aux dessins, on voit que S est un saucisson comportant à l'une de ses extrémités une boucle B, réalisée de façon traditionnelle par un brin de ficelle noué.

Le procédé de l'invention consiste à pincer les deux brins B₁ et B₂ pour les placer dans un même plan puis, à comprimer les deux dits brins de façon à placer ceux-ci de part et d'autre d'un plan contenant l'axe d'une aiguille 1 mobile axialement.

De cette façon, les brins sont parfaitement positionnés par rapport à l'aiguille et si on déplace celle-ci axialement, elle s'insère facilement entre ceux-ci.

On va maintenant décrire une machine permettant la mise en oeuvre de ce procédé.

L'aiguille 1 est portée par un bâti 2 présentant une fenêtre 3 dont les dimensions sont telles que le saucisson S peut la traverser facilement.

La face frontale 4 du bâti comporte un organe de centrage du saucisson tel que, par exemple, un berceau 5 de façon à ce que l'axe longitudinal du saucisson soit contenu sensiblement dans un plan vertical passant par l'axe de l'aiguille 1.

Le bâti 2 constitue l'organe de guidage de deux plaques coulissantes 6ₐ et 6_{b} qui ont pour fonction, en obturant la fenêtre 3 de pincer les deux brins B₁ et B₂ et de placer la partie pincée dans un plan perpendiculaire à celui de l'aiguille 1.

Le bâti 2 et les plaques 6ₐ et 6_{b}, lorsqu'elles pincent la ficelle, constituent les organes de guidage de deux poussoirs 7ₐ et 7_{b} qui ont pour fonction de placer les deux brins, en les comprimant légèrement, de part et d'autre du plan vertical contenant l'axe de l'aiguille 1.

Une canne 8, à extrémité recourbée et conique 9, est disposée sous l'aiguille 1. La partie conique 9 et l'extrémité inférieure de l'aiguille peuvent se raccorder sans solution de continuité.

Le fonctionnement de la machine est le suivant :
Le saucisson S est amené à la machine au moyen, par exemple, d'un conduit 10, la boucle B étant disposée vers l'arrière.

Lorsque le saucisson a traversé la fenêtre 3, on détecte son passage et on commande la fermeture des plaques 6ₐ et 6_{b} qui pincent la boucle. Les poussoirs 7ₐ et 7_{b} entrent ensuite en jeu et centrent les deux brins B₁ et B₂ de façon à les placer de part et d'autre du plan contenant l'axe de l'aiguille 1 qui est située en avant de la zone où s'effectue le pincement.

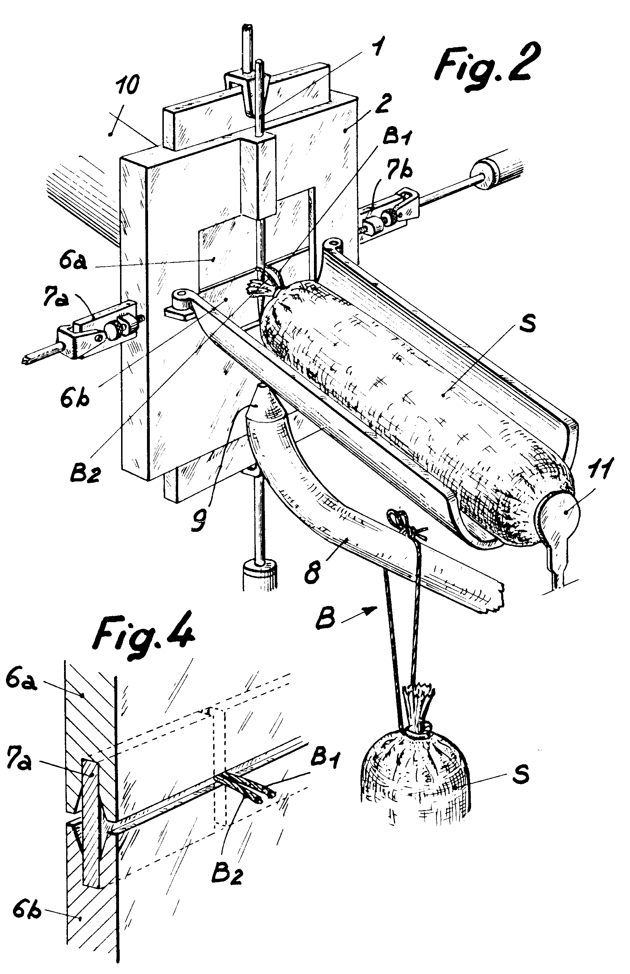

En effet, on a constaté que la pression exercée par les poussoirs 7ₐ et 7_{b} tendait à écarter les brins, comme montré sur la figure 4 ce qui contribue à faciliter l'introduction de l'aiguille entre eux.

Lorsque l'aiguille 1 a traversé la boucle elle vient en coincidence avec l'extrémité conique de la canne, l'organe de centrage 5 s'escamote, la boucle glisse par gravité entraînée par le poids du saucisson qui vient occuper la position montrée sur la figure 2.

Dans l'exemple représenté, le berceau 5 est réalisé en deux parties et chaque partie est articulée sur le bâti, des moyens tels que des vérins ,non représentés, sont prévus pour permettre le pivotement desdites parties.

Les opérations qui ont été décrites ci-dessus sont commandées par le saucisson dont la position, par rapport au bâti, est fixée par une butée réglable 11 à micro-contact qui envoie un signal de commande susceptible de déclencher lesdites opérations.

D'une façon générale, tous les organes mobiles sont actionnés par des vérins commandés par des électrovannes. Il n'y a pas lieu de décrire ces dispositifs dont la réalisation est à la portée de l'homme de l'art ainsi que la façon de les synchroniser.

Selon une caractéristique de l'invention,des moyens sont prévus pour tendre les deux brins lorsque ceux-ci sont pincés. Un moyen pour atteindre ce résultat consiste à utiliser la masse du saucisson. Ainsi, dans l'exemple représenté, le berceau 5 est fortement incliné.

C'est ainsi, entre autres, que des moyens peuvent être utilisés pour déployer la boucle préalablement à sa saisie par la machine. Un tel moyen peut être constitué par des jets d'air,convenablement orientés, disposés dans le conduit (10).

## Revendications

1. Procédé pour enfiler la boucle des saucissons et analogues sur une barre, caractérisé par le fait qu'il consiste dans un premier temps, à pincer la boucle pour placer ses deux brins dans un même plan, dans un second temps, à pincer les deux brins dans une direction perpendiculaire à la première et, simultanément, à placer ceux-ci de part et d'autre d'un plan contenant l'axe d'une aiguille mobile axialement, dans un troisième temps, à faire passer ladite aiguille entre les deux brins, dans un quatrième temps, à faire coincider l'extrémité de l'aiguille avec l'extrémité recourbée d'une canne et, dans un cinquième temps, à transférer la boucle de l'aiguille à la canne sous l'action exercée par le poids du saucisson.

2. Machine pour la mise en oeuvre du procédé de la revendication 1,caractérisée en ce que l'aiguille 1 est portée par un bâti (2) présentant une fenêtre (3) pouvant être obturée par deux plaques (6ₐ et 6_{b})coulissantes , le bâti (2) servant de guidage à deux poussoirs (7ₐ et 7_{b}) et en ce que le bâti (2) comporte un organe de centrage (5) de la saucisse ou du saucisson.

3. Machine selon la revendication 2,caractérisée en ce que les plaques (6ₐ et 6_{b}) constituent, en combinaison avec le bâti (2) les organes de guidage des poussoirs (7ₐ et 7_{b}).

4. Machine selon l'une quelconque des revendications 2 et 3 caractérisée en ce que l'organe de centrage (5) est constitué par un berceau escamotable.

5. Machine selon la revendication 4,caractérisée en ce que le berceau (5) est réalisé en deux parties s'assemblant selon une génératrice, chacune desdites parties étant articulée sur le bâti.

6. Machine selon l'une quelconque des revendications 2 à 5, caractérisée en ce que la position de la saucisse ou du saucisson par rapport à la fenêtre (3) est détectée par une butée réglable (11) à micro-contact.

## Claims

1. Method for threading the loop of sausages and similar products on a bar, wherein said method initially consists of squeezing the loop so as to place its two strands inside a given plane, secondly of squeezing the two strands in a direction perpendicular to the first direction and at the same time axially placing the latter on both sides of a plane containing the axis of a mobile needle, thirdly of making said needle pass between the two strands, fourthly of making the end of the needle coincide with the bent back end of a cane, and fifthly of transferring the loop of the needle to the cane via the action exerted by the weight of the sausage.

2. Machine for implementing the method of claim 1, wherein the needle 1 is borne by a frame (2) having a window (3) able to be sealed off by two sliding plates (6a and 6b), the frame (2) being used to guide two thrustors (7a and 7b) and wherein the frame (2) comprises a member (5) for centering the sausage or dried sausage.

3. Machine according to claim 2, wherein the plates (6a and 6b), when combined with the frame (2), form the members for guiding the thrustors (7a and 7b).

4. Machine according to claim 2 or 3, wherein the centering member (5) is constituted by a retractable cradle.

5. Machine according to claim 4, wherein the cradle (5) is formed of two portions being assembled along a generating line, each of said portions being joined to the frame.

6. Machine according to any one of claims 2 to 5, wherein the position of the sausage or dried sausage with respect to the window (3) is detected by an adjustable micro contact stop (11).

## Patentansprüche

1. Verfahren zum Einführen einer Stange in die Schlaufe einer Trockenwurst oder ähnlichem, dadurch gekennzeichnet, daß die Schlaufe zuerst so gepreßt wird, daß die beiden Schlaufenteile auf einer Ebene liegen, daß in einem zweiten Arbeitsschritt die beiden Schlaufenteile in einer senkrecht zur ersten Ebene liegenden Richtung gepreßt und gleichzeitig links und rechts von einer Fläche angeordnet werden, auf der sich die Achse einer in Achsrichtung beweglichen Nadel befindet, daß in einem dritten Arbeitsschritt die Nadel durch die beiden Schleifenteile eingeführt wird, daß in einem vierten Arbeitsschritt die Nadel mit dem gekrümmten Ende einer Stange zusammentrifft und daß in einem fünften Arbeitsschritt die Schlaufe unter dem Eigengewicht der Trockenwurst von der Nadel auf die Stange gleitet.

2. Maschine zur Anwendung des Verfahrens nach Patentanspruch 1, dadurch gekennzeichnet, daß die Nadel (1) von einem Rahmen (2) gehalten wird, der ein Fenster (3) besitzt, das von zwei verschiebbaren Platten (6a und 6b) verschlossen werden kann, wobei der Rahmen (2) zwei Schiebern (7a und 7b) als Führung dient und eine Vorrichtung zum Zentrieren (5) der Trockenwurst o.ä. besitzt.

3. Maschine nach Patentanspruch 2, dadurch gekennzeichnet, daß die Platten (6a und 6b) in Verbindung mit dem Rahmen (2) eine Führung für die Schieber (7a und 7b) bilden.

4. Maschine nach Patentanspruch 2 und 3, dadurch gekennzeichnet, daß die Zentriervorrichtung (5) aus einer abklappbaren Schale besteht.

5. Maschine nach Patentanspruch 4, dadurch gekennzeichnet, daß die Schale (5) aus zwei Teilen besteht, die entlang einer Mantellinie zusammenpassen, und daß jedes Teil schwenkbar am Rahmen befestigt ist.

6. Maschine nach Patentanspruch 2 bis 5, dadurch gekennzeichnet, daß die Lage der Trockenwurst o.ä. in Bezug auf das Fenster (3) durch einen verstellbaren Anschlag (11) mit Kleinschalter erkannt wird.
